# EUROPEAN PATENT SPECIFICATION

(11) **EP 4 231 533 B1**
(45) Date of publication and mention of the grant of the patent: **25.02.2026**
(21) Application number: 23156286.9
(22) Date of filing: 13.02.2023
(51) Int. Cl.: H04B 1/40

(54) **IF TRANSCEIVER, RF MODULE AND ELECTRONIC DEVICE INCLUDING THE SAME**
IF-SENDER/EMPFÄNGER, HF-MODUL UND ELEKTRONISCHE VORRICHTUNG DAMIT
ÉMETTEUR-RÉCEPTEUR FI, MODULE RF ET DISPOSITIF ÉLECTRONIQUE LE COMPRENANT

(30) Priority: 21.02.2022 KR 20220021998; 18.05.2022 KR 20220060968
(43) Date of publication of application: 23.08.2023
(73) Proprietor: Samsung Electronics Co., Ltd., Suwon-si, Gyeonggi-do 16677 (KR)
(72) Inventor: HAN, Sangwook, 16677 Suwon-si (KR); KIM, Jungwoo, 16677 Suwon-si (KR); KIM, Hyunggi, 16677 Suwon-si (KR)
(74) Representative: Marks & Clerk LLP

(56) References cited:
- US-A1- 2015 087 248
- US-A1- 2019 181 894
- US-A1- 2020 287 574

## Description

### BACKGROUND

Embodiments of the present disclosure relate to an IF transceiver, an RF module, and an electronic device including the same, and more particularly, relate to an IF transceiver capable of transmitting and receiving signals through different interfaces, an RF module, and an electronic device including the same.

Among 5G (5^{th} Generation) mobile systems, in particular, the importance of a mobile phone terminal equipped with an FR2 (e.g., Frequency Range 2) subsystem is increasing. The main hardware (HW) constituting the FR2 mobile mmWave (e.g., millimeter wave) system is a type in which 1) an IF (Intermediate Frequency) transceiver and 2) an RF (Radio Frequency) module (or a PA (Phased array) transceiver), are mounted, and from the system point of view the interface between the two hardware components should be properly configured.

Since the FR2 has a higher frequency, the frequency itself of the signal between the RF module and the IF transceiver is also quite high, so the PLL (Phased-Locked Loop)/LO (Local Oscillator) frequency implementation specifications are also high. When a frequency such as 26MHz TCXO (Temperature Compensated Crystal Oscillator), which is a general reference signal, is used, it is difficult for hardware to obtain a high frequency as the frequency (e.g., 26MHz TCXO) is relatively low, and it becomes an inefficient hardware configuration to configure one synchronized mmWave system, such as through dual mounting of crystals or adding an IO (Input Output) in the module.

As a method of efficiently configuring this, an interface configuration in which a bias-T, which is an LO transfer method capable of configuring a synchronous system, may be mounted as is known in the conventional art. However, in such an interface configuration, it is difficult to properly configure the control signal between the module and the IF transceiver. In the mobile FR2 system, since controlling the RF antenna module in (e.g., by) the IF transceiver is an element of (e.g., used for) beamforming, the control signal should be configured properly.

Alternatively, a system configured in the form of extending several modules may be possible, but this is not suitable for the FR2 mobile system as there are restrictions resulting from the configuration of a higher frequency within the IF transceiver.

US2020287574A1 describes a transmission interface between at least a master module and a slave module. The transmission interface includes a predetermined number of physical transmission medium(s). Each physical transmission medium is arranged to carry a multiplexed signal in which at least two signals are integrated, and the predetermined number is not smaller than a number of intermediate frequency (IF) stream(s) to be transmitted.

US20190181894A1 describes systems and methods for millimeter-wave (MMW) communication, the system includes a transceiver chip to generate and to receive signals. An interface is used to communicate the signals between the transceiver chip and one or more active antenna modules. The signals include modulated MMW signals and control signals. The transceiver chip includes baseband circuitry, up and down conversion mixers, and RF front-end circuitry. An active antenna module receives a first modulated MMW signal from the interface for transmission via antennas and to receive a second modulated MMW signal from the antennas for transmission through the interface to the transceiver chip.

### SUMMARY

The invention is defined in the independent claims. Advantageous embodiments are set out in the dependent claims.

Embodiments of the present disclosure provide an electronic device comprising a RF module and an IF transceiver capable of efficiently transmitting and receiving various signals each having different frequencies by utilizing an AC-coupled interface and a DC-coupled interface, which are heterogeneous interfaces. Embodiments of the present disclosure further provide a RF module.

According to embodiments of the present disclosure, an electronic device includes an IF transceiver configured to output a first IF signal and an LO signal via an AC-coupled interface, the AC-coupled interface configured to perform AC-coupling, the first IF signal being up-converted from a first baseband signal, and the LO signal being generated by at least one processor, and output a second IF signal and a first control signal via a DC-coupled interface, the DC-coupled interface configured to perform DC-coupling, the second IF signal being up-converted from a second baseband signal generated by the at least one processor, and the first control signal being generated based on the LO signal, and an RF module configured to separate the first IF signal and the LO signal obtained via the AC-coupled interface, separate the second IF signal and the first control signal obtained via the DC-coupled interface, generate a first RF signal based on the first IF signal for transmission via an antenna array, and generate a second RF signal based on the second IF signal for transmission via the antenna array.

According to embodiments of the present disclosure, an RF module includes a first diplexer included in an AC-coupled interface configured to perform AC-coupling, the first diplexer configured to receive a first IF signal and an LO signal from an IF transceiver through a first channel, and separate the first IF signal and the LO signal using diplexing, a second diplexer included in a DC-coupled interface configured to perform DC-coupling, the second diplexer configured to receive a second IF signal and a first control signal from the IF transceiver through a second channel, and separate the second IF signal and the first control signal using diplexing, an AC-coupled dual driver configured to AC-couple the LO signal to generate a first AC-coupled LO signal and a second AC-coupled LO signal, a DC-coupled driver configured to DC-couple the first control signal obtained from the second diplexer, and a signal processing unit configured to generate a PLL signal using the first AC-coupled LO signal as a signal for phase detection, generate a first RF signal by up-converting the first IF signal based on the PLL signal, generate a second RF signal by up-converting the second IF signal based on the PLL signal, and generate a second control signal based on the second AC-coupled LO signal.

### BRIEF DESCRIPTION OF THE FIGURES

A detailed description of each drawing is provided to facilitate a more thorough understanding of the drawings referenced in the detailed description of the present disclosure.
FIG. 1 is a diagram illustrating an electronic device, according to embodiments of the present disclosure.
FIG. 2 is a diagram illustrating an IF transceiver and an RF module, according to embodiments of the present disclosure.
FIG. 3 is a diagram illustrating an IF transceiver, according to embodiments of the present disclosure.
FIG. 4 is a diagram illustrating a first signal processing unit, according to embodiments of the present disclosure.
FIG. 5 is a diagram illustrating a first AC-coupled sub-interface, according to embodiments of the present disclosure.
FIG. 6 is a diagram illustrating a first DC-coupled sub-interface, according to embodiments of the present disclosure.
FIG. 7 is a diagram illustrating an RF module, according to embodiments of the present disclosure.
FIG. 8 is a diagram illustrating a second AC-coupled sub-interface, according to embodiments of the present disclosure.
FIG. 9 is a diagram illustrating a second DC-coupled sub-interface, according to embodiments of the present disclosure.
FIG. 10 is a diagram illustrating a second signal processing unit, according to embodiments of the present disclosure.
FIGS. 11A to 11E are diagrams for describing an operation of an AC-coupled interface, according to embodiments of the present disclosure.
FIGS. 12A to 12C are diagrams for describing an operation of a DC-coupled interface, according to embodiments of the present disclosure.
FIG. 13 is a diagram illustrating a wireless communication system including an electronic device according to embodiments of the present disclosure.

### DETAILED DESCRIPTION

Hereinafter, embodiments of the present disclosure may be described in detail and clearly to such an extent that an ordinary one in the art can easily implement the present disclosure.

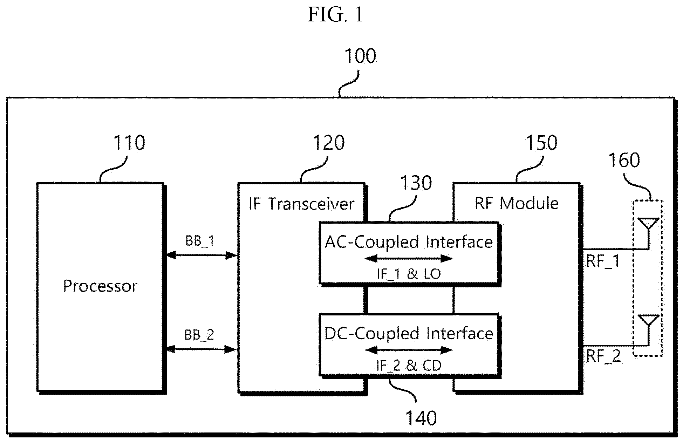

FIG. 1 is a diagram illustrating an electronic device, according to embodiments of the present disclosure.

Referring to FIG. 1, an electronic device 100 may also be referred to as a user equipment (UE). The electronic device 100 may include a processor 110, an IF (intermediate frequency) transceiver 120, an AC (alternating current)-coupled interface 130, a DC (direct current)-coupled interface 140, an RF (radio frequency) module 150, and/or an antenna array 160.

The processor 110 may generate a baseband signal based on data to be transmitted to another electronic device (e.g., other user equipment, a base station, etc.) connected to the electronic device 100 through a network to provide the generated baseband signal to the IF transceiver 120. Alternatively, the processor 110 may extract data transmitted by another electronic device from the baseband signal received from the IF transceiver 120. For example, the processor 110 may modulate data to be transmitted to another electronic device, may convert the modulated digital data, and may output the baseband signal. For example, the processor 110 may acquire digital data by converting the baseband signal received from another electronic device. The processor 110 may also be referred to as a modem.

The baseband signal may include a first baseband signal BB_1 and a second baseband signal BB_2. The first baseband signal BB_1 may be finally converted into a first RF signal RF_1 after passing through an intermediate frequency band, that is, an IF band and an RF band through up-conversion, and the first RF signal RF_1 may be polarized in the first direction. For example, the first direction may be horizontal to the ground. The second baseband signal BB_2 may be finally converted into the second RF signal RF_2 after passing through the IF band and the RF band through up-conversion, and the second RF signal RF_2 may be polarized in the second direction. For example, the second direction may be perpendicular to the ground.

The IF transceiver 120 may also be referred to as an intermediate frequency integrated circuit (IFIC), and may transmit and receive different signals through the AC-coupled interface 130 and the DC-coupled interface 140 that are heterogeneous interfaces. In detail, the IF transceiver 120 may transmit and receive different signals to and from the RF module 150 through different paths.

The IF transceiver 120 may generate a first IF signal IF_1 by up-converting the first baseband signal BB_1 generated by the at least one processor 110, and output the first IF signal IF_1 and an LO (local oscillator) signal LO to the RF module 150 through the AC-coupled interface 130. The first IF signal IF_1 and the LO signal LO may be combined and output through a diplexing procedure. The IF transceiver 120 may up-convert the second baseband signal BB_2 generated by the at least one processor 110 to generate a second IF signal IF_2, and generate a control signal CD for controlling the RF module 150 based on the LO signal LO. The IF transceiver 120 may output the generated second IF signal IF_2 and the control signal CD to the RF module 150 through the DC-coupled interface 140. According to embodiments, the control signal CD may contain information for performing beamforming (e.g., phase information, magnitude information, etc.), and may be used by the IF transceiver 120 to control the beamforming operations of the RF module 150. According to embodiments, each of the IF transceiver 120 and the RF module 150 may generate control signals CD (may be referred to as a first control signal and a second control signal, respectively) and transfer these control signals CD to one another in order to control beamforming operations. According to embodiments, a control signal being received by either of the IF transceiver 120 or the RF module 150 may be referred to as a read signal, and a control signal being transmitted by either of the IF transceiver 120 or the RF module 150 may be referred to as a write signal.

According to embodiments, the IF transceiver 120 may receive the first IF signal IF_1 from the RF module 150 through the AC-coupled interface 130, may receive the second IF signal IF_2 and the control signal CD through the DC-coupled interface 140, and may extract the first baseband signal BB_1 and the second baseband signal BB_2 from the first IF signal IF_1 and the second IF signal IF_2, respectively.

The AC-coupled interface 130 may be provided between the IF transceiver 120 and the RF module 150 to form a first path. The AC-coupled interface 130 may transmit and receive the first IF signal IF_1 between the IF transceiver 120 and the RF module 150, and may transmit the LO signal LO to the RF module 150.

In particular, the LO signal LO transmitted and received through the AC-coupled interface 130 may be AC-coupled.

The DC-coupled interface 140 may be provided between the IF transceiver 120 and the RF module 150 to form a second path. The DC-coupled interface 140 may transmit and receive the second IF signal IF_2 and the control signal CD between the IF transceiver 120 and the RF module 150.

The control signal CD transmitted and received through the DC-coupled interface 140 may be DC-coupled in particular.

The RF module 150 may also be referred to as an RF transceiver or a PA (phased array), and may transmit and receive different signals through the AC-coupled interface 130 and the DC-coupled interface 140 that are heterogeneous interfaces.

The RF module 150 may separate the first IF signal IF_1 and the LO signal LO received from the IF transceiver 120 through the AC-coupled interface 130, and separate the second IF signal IF_2 and the control signal CD received through the DC-coupled interface 140. Thereafter, the RF module 150 may generate the first RF signal RF_1 and the second RF signal RF_2 based on the separated first IF signal IF_1 and the separated second IF signal IF_2, and transfer the generated first RF signal RF_1 and the second RF signal RF_2 to the antenna array 160. According to embodiments, the RF module 150 may control transmission of the first RF signal RF_1 and the second RF signal RF_2 through the antenna array 160 including processing the first RF signal RF_1 and the second RF signal RF_2 for beamforming based on the beamforming information contained in the control signal CD.

According to embodiments, the RF module 150 may receive the first RF signal RF_1 and the second RF signal RF_2 (e.g., via the antenna array 160), and may transmit the first IF signal IF_1 to the IF transceiver 120 through the AC-coupled interface 130, and may transmit the second IF signal IF_2 and the control signal CD to the IF transceiver 120 through the DC-coupled interface 140.

The antenna array 160 may transmit the first RF signal RF_1 and the second RF signal RF_2 generated from the RF module 150 to another electronic device through a medium and/or receive an RF signal from the other electronic device through a medium. The antenna array 160 may include a plurality of antenna elements configured to transmit/receive signals polarized in the first direction, and may include a plurality of antenna elements configured to transmit/receive signals polarized in the second direction. The antenna array 160 may be configured to support technologies such as beamforming, a MIMO (multiple-input and multiple-output), etc.

The electronic device 100 according to embodiments of the present disclosure described above may utilize the AC-coupled interface 130 and the DC-coupled interface 140, which are heterogeneous interfaces, to transmit and receive various signals each having different frequencies and different characteristics. In particular, since the LO signal LO, which is a clock signal, is transmitted through AC-coupling, and the control signal CD mainly having a DC component is transmitted through DC-coupling, signals having different characteristics may be transmitted and received without distortion.

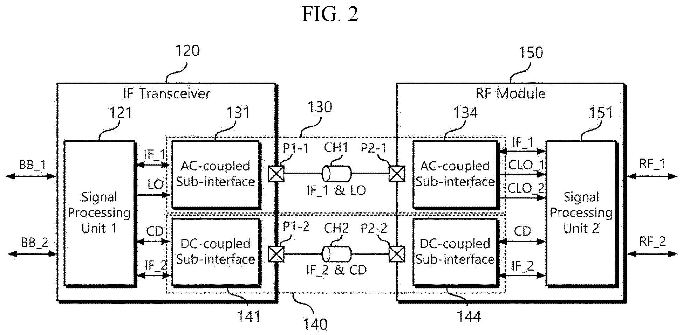

FIG. 2 is a diagram illustrating an IF transceiver and an RF module, according to embodiments of the present disclosure.

Referring to FIG. 2, the IF transceiver 120 may include a first signal processing unit 121, a first AC-coupled sub-interface 131, and/or a first DC-coupled sub-interface 141. According to embodiments, two integers separated by a "-" (e.g., 1-1, 1-2, etc.) may refer to a label used for distinguishing different elements rather than to an indication of function or configuration.

The first signal processing unit 121 may be configured to process the first baseband signal BB_1 and the second baseband signal BB_2 to generate the first IF signal IF_1, the second IF signal IF_2, the LO signal LO, and the control signal CD. For example, the first signal processing unit 121 may perform an up-conversion operation to generate the first IF signal IF_1 and the second IF signal IF_2, may perform an oscillation operation or a division operation to generate the LO signal LO, and/or may perform a division operation to generate the control signal CD.

The first AC-coupled sub-interface 131 may be included in the above-described AC-coupled interface 130. The first AC-coupled sub-interface 131 may diplex and combine the first IF signal IF_1 and the LO signal LO received from the first signal processing unit 121, and output the combined signal to a first channel CH1 through a 1-1 port P1-1.

According to embodiments, when the first IF signal IF_1 through the first channel CH1 is received by the IF transceiver 120, the first AC-coupled sub-interface 131 may diplex and separate the first IF signal IF_1, and may transfer the separated signal to the first signal processing unit 121.

The first DC-coupled sub-interface 141 may be included in the above-described DC-coupled interface 140. The first DC-coupled sub-interface 141 may diplex and combine the second IF signal IF_2 and the control signal CD received from the first signal processing unit 121, and output the combined signal to a second channel CH2 through a 1-2 port P1-2.

According to embodiments, when the second IF signal IF_2 and the control signal CD through the second channel CH2 are received by the IF transceiver 120, the first DC-coupled sub-interface 141 may diplex and separate the second IF signal IF_2 and the control signal CD, and may transfer the separated signals to the first signal processing unit 121.

The first channel CH1 and the second channel CH2 may be provided between the IF transceiver 120 and the RF module 150 to connect the IF transceiver 120 and the RF module 150, and correspond to a path through which the signals combined depending on the diplexing are transmitted and received. The first channel CH1 is included in the AC-coupled interface 130, and the second channel CH2 is included in the DC-coupled interface 140. For example, the first channel CH1 and the second channel CH2 may be a printed circuit board (PCB) or a flexible printed circuit board (FPCB) including a coaxial cable.

According to embodiments, the first channel CH1 may correspond to a path for transmitting and receiving the signal polarized in the first direction described above, and the second channel CH2 may correspond to a path for transmitting and receiving the signal polarized in the second direction described above.

The RF module 150 may be connected to the IF transceiver 120 through the first channel CH1 and the second channel CH2, and may include a second AC-coupled sub-interface 134, a second DC-coupled sub-interface 144, and/or a second signal processing unit 151.

The second AC-coupled sub-interface 134 may be included in the AC-coupled interface 130. The second AC-coupled sub-interface may receive the first IF signal IF_1 and the LO signal LO from the first channel CH1 through a 2-1 port P2-1, and may separate the first IF signal IF_1 and the LO signal LO based on the diplexing. Thereafter, the second AC-coupled sub-interface 134 may separate a first AC-coupled LO signal CLO_1 and a second AC-coupled LO signal CLO_2 from the LO signal LO, based on AC-coupling.

The separated first AC-coupled LO signal CLO_1 and the separated second AC-coupled LO signal CLO_2 may be clock signals having the same frequency band as (or a similar frequency band to) the LO signal LO, but may have different degrees of noise removed by the AC-coupling. For example, the first AC-coupled LO signal CLO_1 may be a clean (or cleaner) clock signal, and the second AC-coupled LO signal CLO_2 may be a dirty (or dirtier) clock signal having more noise than the clean clock signal. The separated first AC-coupled LO signal CLO _1 and the separated second AC-coupled LO signal CLO_2 may be used to generate different signals as will be described later. That is, the second AC-coupled sub-interface 134 my AC-couple the LO signal LO depending on the application, and may particularly have a benefit in the design of a coupling circuit that AC-couples the dirty clock signal.

In addition, since the IF transceiver 120 and the RF module 150 may be synchronized with each other, based on the LO signal LO, the first AC-coupled LO signal CLO_1, and the second AC-coupled LO signal CLO_2 having the same frequency band (or similar frequency bands), the electronic device may be implemented as a synchronous system.

According to embodiments, when the first IF signal IF_1 is received (e.g., from the second signal processing unit 151, the second AC-coupled sub-interface 134 may transmit the first IF signal IF_1 to the IF transceiver 120 through the first channel CH1.

The second DC-coupled sub-interface 144 may be included in the DC-coupled interface 140. The second DC-coupled sub-interface 144 may receive the second IF signal IF_2 and the control signal CD from the second channel CH2 through a 2-2 port P2-2, and separate the second IF signal IF_2 and the control signal CD based on the diplexing.

According to embodiments, when the second IF signal IF_2 and the control signal CD are received from the second signal processing unit 151, the second DC-coupled sub-interface 144 may transfer the second IF signal IF_2 and the control signal CD to the IF transceiver 120 through the second channel CH2.

The second signal processing unit 151 may process the first IF signal IF_1, the first AC-coupled LO signal CLO_1, and the second AC-coupled LO signal CLO_2, which are separated from the second AC-coupled sub-interface 134, and the second IF signal IF_2 and the control signal CD, which are separated from the second DC-coupled sub-interface 144 to generate the first RF signal RF_1 and the second RF signal RF_2.

The AC-coupled interface 130 may be defined as including the first AC-coupled sub-interface 131 included in the above-described IF transceiver 120, the second AC-coupled sub-interface 134 included in the RF module 150, the 1-1 port P1-1, the first channel CH1, and the 2-1 port P2-1. Accordingly, the AC-coupled interface 130 may transmit and receive the first IF signal IF_1 and the LO signal LO conjointly or separately, and may perform an AC-coupling.

The DC-coupled interface 140 may be defined as including the first DC-coupled sub-interface 141 included in the above-described IF transceiver 120, the second DC-coupled sub-interface 144 included in the RF module 150, the 1-2 port P1-2, the second channel CH2, and the 2-2 port P2-2. Accordingly, the DC-coupled interface 140 may transmit and receive the second IF signal IF_2 and the control signal CD conjointly or separately, and may perform a DC-coupling.

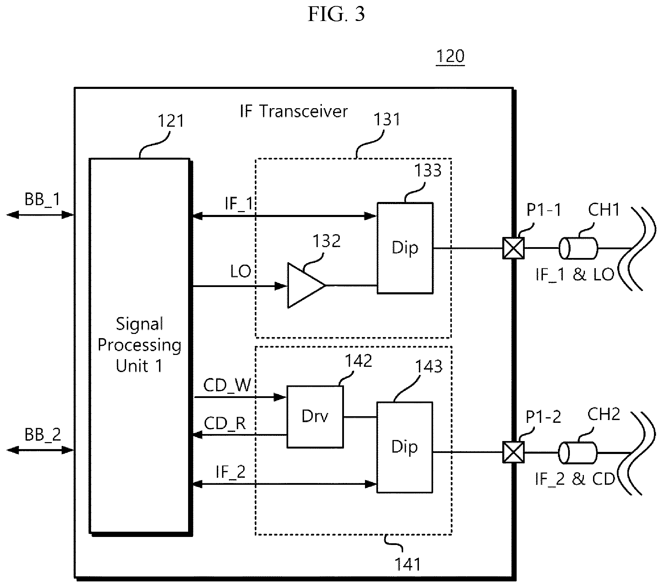

FIG. 3 is a diagram illustrating an IF transceiver, according to embodiments of the present disclosure.

Referring to FIG. 3, the IF transceiver 120 may include the first signal processing unit 121, the first AC-coupled sub-interface 131 and/or the first DC-coupled sub-interface 141 connected to the first signal processing unit 121, as described above, and the first AC-coupled sub-interface 131 and the first DC-coupled sub-interface 141 will be described in more detail.

The first AC-coupled sub-interface 131 may include an LO driver 132 and/or a 1-1 diplexer 133.

The LO driver 132 may amplify the LO signal LO transferred from the first signal processing unit 121 (in more detail, a 1-1 divider 123 to be described later) in a suitable amplitude such that the LO signal LO is sufficiently applied to the RF module 150. The 1-1 diplexer 133 combines the first IF signal IF_1 received from the first signal processing unit 121 and the LO signal LO received from the LO driver 132 based on the diplexing, and outputs the combined signal to the 1-1 port P1-1.

The first DC-coupled sub-interface 141 may include a first DC-coupled driver 142 and/or a 1-2 diplexer 143.

The first DC-coupled driver 142 may DC-couple the control signal CD received from the first signal processing unit 121 and may be configured in various ways to perform the DC-coupling. In detail, the first DC-coupled driver 142 may allow a write signal CD_W and a read signal CD_R, which may be different signals included in the control signal CD, to be communicated with the first signal processing unit 121 through the DC-coupling, bidirectionally. The 1-2 diplexer 143 may combine the second IF signal IF_2 and the control signal CD received from the first signal processing unit 121 based on the diplexing, and output the combined signal to the 1-2 port P1-2.

In embodiments, the 1-1 diplexer 133 and the 1-2 diplexer 143 may be configured to have the same cutoff frequency (or similar cutoff frequencies) with respect to an LPF (Low Pass Filter), and/or to have the same cutoff frequency (or similar cutoff frequencies) with respect to an HPF (High Pass Filter). Even if the cutoff frequency is configured to be the same (or similar), the LO signal LO and the control signal CD having a lower band than the IF signal may be separated, and design complexity may be reduced.

In embodiments, the 1-1 diplexer 133 and/or the 1-2 diplexer 143 may be implemented in the form of a System on Chip (SoC) in the IF transceiver 120.

In embodiments, since the DC-coupled interface 140 capable of coupling DC components may be provided in the electronic device 100, the 1-1 diplexer 133 and/or the 1-2 diplexer 143 may be implemented without a separate DC port.

The above-described IF transceiver 120 according to embodiments of the present disclosure has sub-interfaces in different paths, but since each sub-interface performs the diplexing depending on the type of signal to be transmitted/received, it is possible to properly transmit and receive different signals to and from the RF module 150 with only a minimum (or lower) number of ports. In particular, the control signal CD may be DC-coupled such that the RF module 150 may utilize the DC components of the control signal CD. In addition, when the IF signal, the LO signal LO, and the control signal CD having different frequencies are transmitted and received through one interface, a separate DC port may be provided to extract the control signal CD having the DC components. However, since the DC-coupled interface 140 is provided separately from the AC-coupled interface 130, a separate DC port may not be provided according to embodiments.

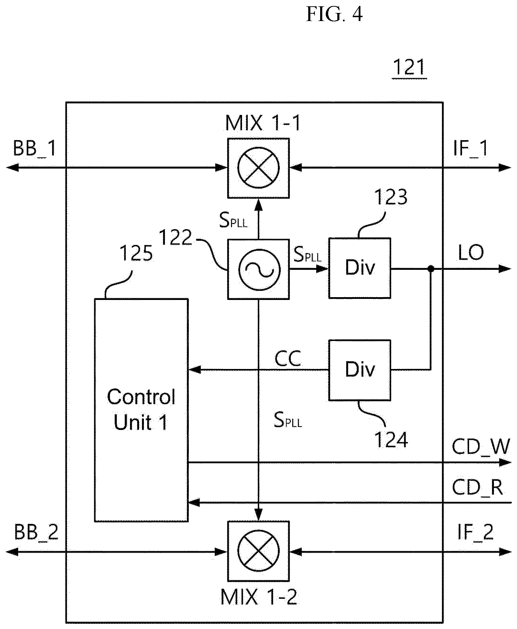

FIG. 4 is a diagram illustrating a first signal processing unit, according to embodiments of the present disclosure.

Referring to FIG. 4, the first signal processing unit 121 included in the IF transceiver 120 may include a first PLL (Phased-Lock Loop) 122, a 1-1 mixer MIX 1-1, a 1-2 mixer MIX 1-2, a 1-1 divider 123, a 1-2 divider 124, and/or a first control unit 125.

The first PLL 122 may generate a PLL signal SPLL (e.g., a first PLL signal SPLL) having an oscillation frequency, and transfer the generated PLL signal SPLL to the 1-1 mixer MIX 1-1 and the 1-2 mixer MIX 1-2. The 1-1 mixer MIX 1-1 may generate the first IF signal IF_1 by up-converting the first baseband signal BB_1 based on the PLL signal SPLL. For example, the 1-1 mixer MIX 1-1 may sum a baseband frequency corresponding to the first baseband signal BB_1 and a frequency corresponding to the PLL signal SPLL, and generate the first IF signal IF_1 corresponding to the summed frequency. The 1-2 mixer MIX 1-2 may generate the second IF signal IF_2 by up-converting the second baseband signal BB_2 based on the PLL signal SPLL. For example, the 1-2 mixer MIX 1-2 may sum a baseband frequency corresponding to the second baseband signal BB_2 and a frequency corresponding to the PLL signal SPLL, and generate the second IF signal IF_2 corresponding to the summed frequency.

According to embodiments, the 1-1 mixer MIX 1-1 and the 1-2 mixer MIX 1-2 may down-convert the first IF signal IF_1 and the second IF signal IF_2, respectively, to extract the first baseband signal BB_1 and the second baseband signal BB_2.

The first IF signal IF_1 and the second IF signal IF_2 may have the same frequency (or similar frequencies) or different frequencies, but both the same frequency (similar frequencies) or the different frequencies may be frequencies included in an intermediate frequency band (e.g., 8GHz to 12GHz). The 1-1 divider 123 may divide the PLL signal SPLL generated by the first PLL 122 to generate the LO signal LO. For example, the 1-1 divider 123 may be configured to divide a frequency corresponding to the PLL signal SPLL into a frequency corresponding to the LO signal LO. The 1-2 divider 124 may divide the LO signal LO generated by the 1-1 divider 123 to generate a CC (control clock) signal (e.g., a first CC signal). For example, the 1-2 divider 124 may be configured to divide a frequency corresponding to the LO signal LO into a frequency corresponding to the CC signal. Both the LO signal LO and the CC signal generated by the 1-1 divider 123 and the 1-2 divider 124 may be clock signals and are used for synchronization of the electronic device 100. However, the LO signal LO may have an appropriate frequency to up-convert the IF signal or down-convert the RF signal, and the CC signal may have an appropriate frequency to be used by the first control unit 125 and/or a second control unit 154 included in the RF module 150. For example, the frequency of the CC signal may be lower than the frequency of the LO signal LO.

The first control unit 125 may generate the control signal CD (e.g., a first control signal CD) based on the CC signal. For example, the control signal CD may be a digital signal and may include the write signal CD_W for controlling the second control unit 154, which will be described later, and/or the read signal CD_R received from the second control unit 154. The first control unit 125 may control the IF transceiver 120 based on the control signal CD.

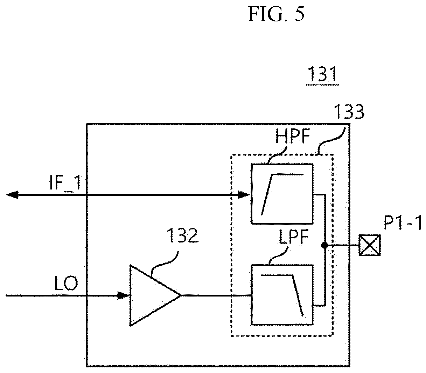

FIG. 5 is a diagram illustrating a first AC-coupled sub-interface, according to embodiments of the present disclosure. The detailed description of redundant components may be omitted to avoid redundancy.

Referring to FIG. 5, the first AC-coupled sub-interface 131 included in the IF transceiver 120 may transmit and receive the first IF signal IF_1 to and from the first signal processing unit 121, or receive the LO signal LO from the first signal processing unit 121. The first AC-coupled sub-interface may amplify the LO signal LO by an amplitude suitable for transmission to the RF module 150 through the LO driver 132 and transfer the amplified LO signal to the 1-1 diplexer 133. The 1-1 diplexer 133 may pass the first IF signal IF_1 received from the first signal processing unit 121 through an HPF (high pass filter) and pass the LO signal LO received from the LO driver 132 through an LPF (low pass filter) to combine the first IF signal IF_1 and the LO signal LO. That is, the 1-1 diplexer 133 may include an HPF for passing the first IF signal IF_1 of a relatively high band and an LPF for passing the LO signal LO of a relatively low band. The 1-1 diplexer 133 may output the first IF signal IF_1 and the LO signal LO combined through the HPF and the LPF through the 1-1 port P1-1.

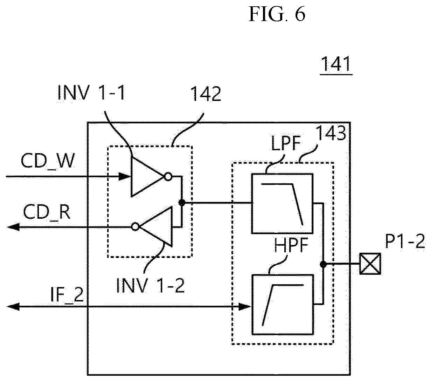

FIG. 6 is a diagram illustrating a first DC-coupled sub-interface, according to embodiments of the present disclosure. The detailed description of redundant components may be omitted to avoid redundancy.

Referring to FIG. 6, the first DC-coupled sub-interface 141 included in the IF transceiver 120 may transmit and receive the second IF signal IF_2 to and from the first signal processing unit 121, or transmit and receive the control signal CD to and from the first signal processing unit 121. The first DC-coupled sub-interface 141 may DC-couple the read signal CD_R and/or the write signal CD_W included in the control signal CD through the first DC-coupled driver 142, and may transmit and receive bidirectionally.

According to embodiments, the first DC-coupled driver 142 may include a 1-1 inverter INV 1-1 and/or a 1-2 inverter INV 1-2. The 1-1 inverter INV 1-1 may receive the write signal CD_W, DC-couple the write signal CD_W, and output the DC-coupled write signal CD_W to the 1-2 diplexer 143, and the 1-2 inverter INV 1-2 may receive the control signal CD passing through the LPF from the 1-2 diplexer 143, DC-couple the control signal CD, and output the DC-coupled control signal CD. The 1-2 diplexer 143 may pass the second IF signal IF_2 through an HPF, and pass the control signal CD transferred from the first DC-coupled driver 142 through an LPF, to combine the second IF signal IF_2 and the control signal CD. Like the 1-1 diplexer 133, the 1-2 diplexer 143 may include an HPF and/or an LPF. The 1-2 diplexer 143 may output the second IF signal IF_2 and the control signal CD combined through the HPF and the LPF through the 1-2 port P1-2.

In embodiments, the HPF included in the above-described 1-1 diplexer 133 and 1-2 diplexer 143 may be configured to filter a high-band IF signal, and the HPF may be implemented, for example, with a C-L-C structure.

In embodiments, the LPF included in the 1-1 diplexer 133 and the 1-2 diplexer 143 may be configured to filter the LO signal LO and the control signal CD having a low-band, and the LPF may be implemented, for example, with an L-C-L structure.

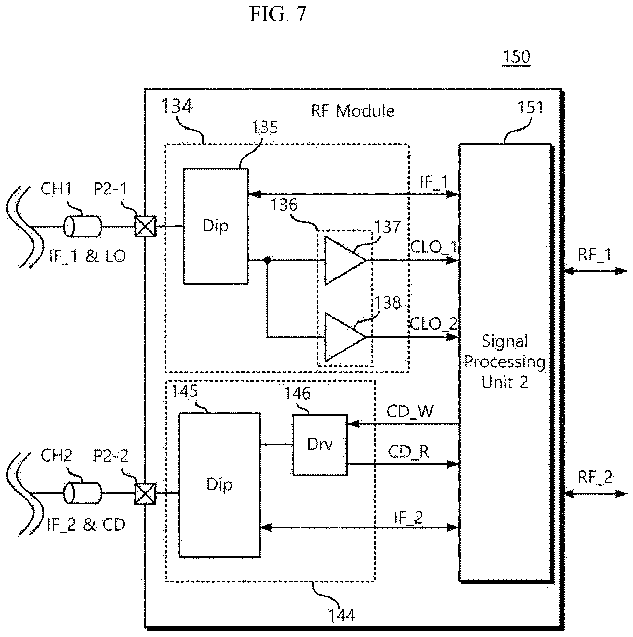

FIG. 7 is a diagram illustrating an RF module, according to embodiments of the present disclosure.

Referring to FIG. 7, the RF module 150 may include the second AC-coupled sub-interface 134, the second DC-coupled sub-interface 144, and/or the second signal processing unit 151 as described above, and the second AC-coupled sub-interface 134 and the second DC-coupled sub-interface 144 will be described in more detail.

The second AC-coupled sub-interface 134 may include a 2-1 diplexer 135 and/or an AC-coupled dual driver 136. The 2-1 diplexer 135 may diplex the combined signal received from the 2-1 port P2-1, separate the combined signal into the first IF signal IF_1 and the LO signal LO, output the first IF signal IF_1 to the second signal processing unit 151, and output the LO signal LO to the AC-coupled dual driver 136.

The AC-coupled dual driver 136 may include a first AC-coupled driver 137 and/or a second AC-coupled driver 138. The first AC-coupled driver 137 may AC-couple the LO signal LO to generate the first AC-coupled LO signal CLO_1, and the second AC-coupled driver 138 may AC-couple the LO signal LO to generate the second AC-coupled LO signal CLO_2. The AC-coupled dual driver 136 may transfer the generated first AC-coupled LO signal CLO_1 and the second AC-coupled LO signal CLO_2 to the second signal processing unit 151.

The second DC-coupled sub-interface 144 may include a 2-2 diplexer 145 and/or a second DC-coupled driver 146.

The 2-2 diplexer 145 may diplex the combined signal received from the 2-2 port P2-2, separate the combined signal into the second IF signal IF_2 and the control signal CD, transfer the second IF signal IF_2 to the second signal processing unit 151, and transfer the control signal CD to the second DC-coupled driver 146.

The second DC-coupled driver 146 may DC-couple the control signal CD received from the 2-2 diplexer 145 and may be configured in various ways to perform the DC-coupling. In detail, the second DC-coupled driver 146 may allow the write signal CD_W and the read signal CD_R, which may be different signals included in the control signal CD, to be communicated with the second signal processing unit 151 through the DC-coupling, bidirectionally.

In embodiments, the 2-1 diplexer 135 and/or the 2-2 diplexer 145 may be configured to have the same cutoff frequency (or similar cutoff frequencies) with respect to an LPF, and/or to have the same cutoff frequency (or similar cutoff frequencies) with respect to an HPF. Even if the cutoff frequency is configured to be the same (or similar), the LO signal LO and the control signal CD having a lower band than the IF signal may be separated, and design complexity may be reduced.

In embodiments, the 2-1 diplexer 135 and/or the 2-2 diplexer 145 may be implemented in the form of an SoC in the RF module 150.

In embodiments, since the DC-coupled interface 140 capable of coupling DC components may be provided in the electronic device 100, the 2-1 diplexer 135 and/or the 2-2 diplexer 145 may be implemented without a separate DC port.

The above-described RF module 150 according to embodiments of the present disclosure has sub-interfaces in different paths, but since each sub-interface performs the diplexing depending on the type of signal to be transmitted/received, it is possible to properly transmit and receive different signals to and from the IF transceiver 120 with only a minimum (or lower) number of ports. In particular, the control signal CD may be DC-coupled such that the RF module 150 may utilize the DC components of the control signal CD. In addition, the LO signal LO having different characteristics from the control signal CD may be AC-coupled to be used to generate the PLL signal SPLL. In addition, when the IF signal, the LO signal LO, and the control signal CD having different frequencies are transmitted and received through one interface, a separate DC port may be provided to extract the control signal CD having the DC components. However, since the DC-coupled interface 140 is provided separately from the AC-coupled interface 130, a separate DC port may not be provided according to embodiments.

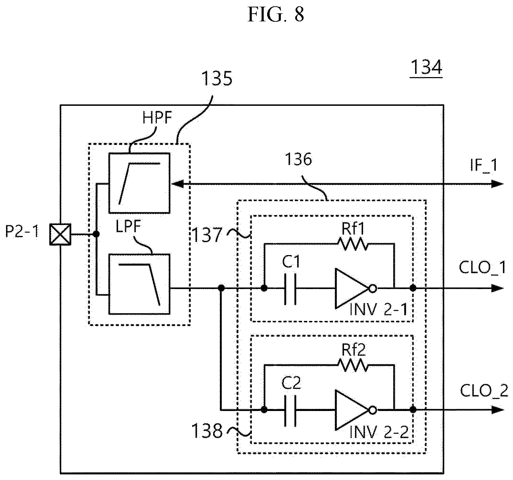

FIG. 8 is a diagram illustrating a second AC-coupled sub-interface, according to embodiments of the present disclosure. The detailed description of redundant components may be omitted to avoid redundancy.

Referring to FIG. 8, the second AC-coupled sub-interface 134 included in the RF module 150 may receive a signal combined by the IF transceiver 120 from the 2-1 port P2-1. The 2-1 diplexer 135 may separate the first IF signal IF_1 and the LO signal LO by passing the first IF signal IF_1 through an HPF and passing the LO signal LO through an LPF. That is, the 2-1 diplexer 135 may include an HPF for passing the first IF signal IF_1 of a relatively high band and an LPF for passing the LO signal LO of a relatively low band. The 2-1 diplexer 135 may transfer the first IF signal IF_1 separated through the HPF to the second signal processing unit 151, and transfer the LO signal LO separated through the LPF to the AC-coupled dual driver 136.

The AC-coupled dual driver 136 may receive and AC-couple the LO signal LO. As described above, the AC-coupled dual driver 136 may include the first AC-coupled driver 137 and the second AC-coupled driver 138 to perform the AC-coupling dually.

According to embodiments, the first AC-coupled driver 137 may include a first capacitor C1, a 2-1 inverter INV 2-1 connected to the first capacitor C1, and/or a first feedback resistor Rf1 connected between an output of the 2-1 inverter INV 2-1 and one end of the first capacitor C1. The first AC-coupled driver 137 may filter DC components of the LO signal LO through the first capacitor C1 to output the first AC-coupled LO signal CLO_1.

According to embodiments, the second AC-coupled driver 138 may include a second capacitor C2, a 2-2 inverter INV 2-2 connected to the second capacitor C2, and/or a second feedback resistor Rf2 connected between an output of the 2-2 inverter INV 2-2 and one end of the second capacitor C2. The second AC-coupled driver 138 may filter DC components of the LO signal LO through the second capacitor C2 to output the second AC-coupled LO signal CLO_2.

According to embodiments, since the inverter having a low-pass characteristic may be combined, AC-coupling may have a band-pass characteristic, such that the noise of the LO signal LO may be effectively blocked. In addition, as described above, each AC-coupled driver may be configurable such that the first AC-coupled LO signal CLO_1 and the second AC-coupled LO signal CLO_2, which are clock signals with the same frequency band (or similar frequency bands), may have different degrees (e.g., amounts) of noise removed according to AC-coupling.

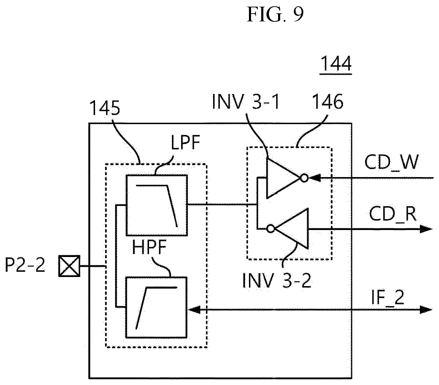

FIG. 9 is a diagram illustrating a second DC-coupled sub-interface, according to embodiments of the present disclosure. The detailed description of redundant components may be omitted to avoid redundancy.

Referring to FIG. 9, the second DC-coupled sub-interface 144 included in the RF module 150 may receive a signal combined by the IF transceiver 120 from the 2-2 port P2-2. The 2-2 diplexer 145 may separate the second IF signal IF_2 and the control signal CD by passing the second IF signal IF_2 through an HPF and passing the control signal CD through an LPF. That is, the 2-2 diplexer 145 may include an HPF for passing the second IF signal IF_2 of a relatively high band and an LPF for passing the control signal CD of a relatively low band. The 2-2 diplexer 145 may transfer the second IF signal IF_2 separated through the HPF to the second signal processing unit 151, and transfer the control signal CD separated through the LPF to the second DC-coupled driver 146.

The second DC-coupled driver 146 may DC-couple the read signal CD_R and/or the write signal CD_W included in the control signal CD, and may transmit and receive bidirectionally.

According to embodiments, the second DC-coupled driver 146 may include a 3-1 inverter INV 3-1 and/or a 3-2 inverter INV 3-2. The 3-1 inverter INV 3-1 may receive the write signal CD_W, DC-couple the write signal CD_W, and output the DC-coupled write signal CD_W to the 2-2 diplexer 145, and the 3-2 inverter INV 3-2 may receive the control signal CD passing through the LPF from the 2-2 diplexer 145, DC-couple the control signal CD, and output the DC-coupled control signal CD as the read signal CD_R.

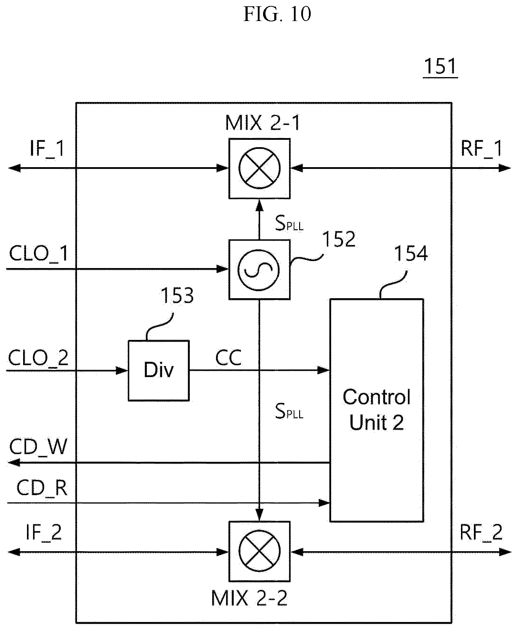

FIG. 10 is a diagram illustrating a second signal processing unit, according to embodiments of the present disclosure.

Referring to FIG. 10, the second signal processing unit 151 included in the RF module 150 may include a second PLL 152, a 2-1 mixer MIX 2-1, a 2-2 mixer MIX 2-2, a second divider 153, and/or the second control unit 154.

The second PLL 152 may generate the PLL signal SPLL (e.g., a second PLL signal SPLL) having an oscillation frequency based on the first AC-coupled LO signal CLO_1, and transfer the generated PLL signal SPLL to the 2-1 mixer MIX 2-1 and the 2-2 mixer MIX 2-2. For example, the second PLL 152 may generate the PLL signal SPLL by using the first AC-coupled LO signal CLO_1 as a signal for phase detection. The 2-1 mixer MIX 2-1 may generate the first RF signal RF_1 by up-converting the first IF signal IF_1 based on the PLL signal SPLL. For example, the 2-1 mixer MIX 2-1 may sum an intermediate band frequency corresponding to the first IF signal IF_1 and a frequency corresponding to the PLL signal SPLL, and generate the first RF signal RF_1 corresponding to the summed frequency. The 2-2 mixer MIX 2-2 may generate the second RF signal RF_2 by up-converting the second IF signal IF_2 based on the PLL signal SPLL. For example, the 2-2 mixer MIX 2-2 may sum an intermediate band frequency corresponding to the second IF signal IF_2 and a frequency corresponding to the PLL signal SPLL, and generate the second RF signal RF_2 corresponding to the summed frequency.

According to embodiments, the 2-1 mixer MIX 2-1 and the 2-2 mixer MIX 2-2 may down-convert the first RF signal RF_1 and the second RF signal RF_2, respectively, to extract the first IF signal IF_1 and the second IF signal IF _2.

The first RF signal RF_1 and the second RF signal RF_2 may have the same frequency (or similar frequencies) or different frequencies, but both may have frequencies included in the mmWave band.

The second divider 153 may divide the second AC-coupled LO signal CLO_2 output through the second AC-coupled driver 138 to generate the CC signal (e.g., a second CC signal). For example, the second divider 153 may be configured to divide a frequency corresponding to the second AC-coupled LO signal CLO_2 into a frequency corresponding to the CC signal. According to embodiments, the second PLL signal may be synchronized with the first PLL signal using the first AC-coupled LO signal CLO_1, and the second CC signal may be synchronized with the first CC signal using the second AC-coupled LO signal CLO_2.

The second control unit 154 may generate the control signal CD (e.g., a second control signal) based on the CC signal. For example, the control signal CD may be a digital signal and may include the write signal CD_W for controlling the first control unit 125 and/or the read signal CD_R received from the first control unit 125. The second control unit 154 may control the RF module 150 based on the control signal CD.

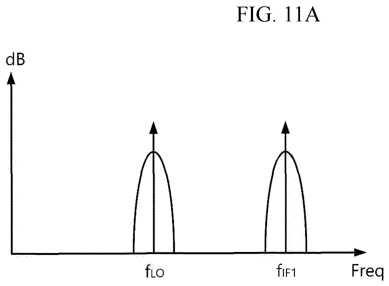

FIGS. 11A to 11E are diagrams for describing an operation of an AC-coupled interface, according to embodiments of the present disclosure. It may be understood that the operation of the AC-coupled interface 130 may be performed by the electronic device 100 according to embodiments of the present disclosure described above. Although the frequency of each signal is described for convenience in FIGS. 11A to 11E, it is of course only as an example.

Referring to FIG. 11A, the first IF signal IF_1 and the LO signal LO may be input to an input terminal of the AC-coupled interface 130, that is, the first AC-coupled sub-interface 131. The first IF signal IF_1 may be an up-converted signal from the first baseband signal BB_1 and has a frequency f_{IF1}, and the LO signal LO has a frequency f_{LO}. The frequency f_{IF1} may be a higher frequency than the frequency f_{LO}. For example, the frequency f_{IF1} may be a band of 8Ghz to 12GHz, and the frequency f_{LO} may be a band of 480MHz to 640MHz.

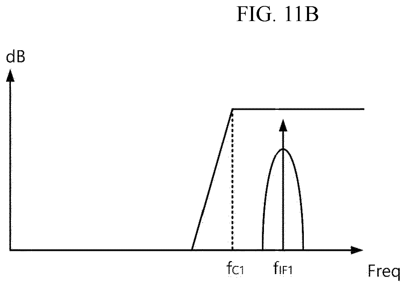

The input first IF signal IF_1 may be filtered by an HPF as illustrated in FIG. 11B. The HPF may be configured to have f_{C1} lesser than f_{IF1} as a cutoff frequency to filter the first IF signal IF_1.

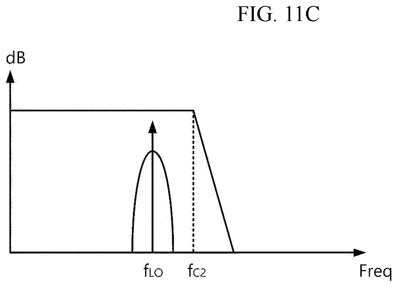

The input LO signal LO may be filtered by an LPF as illustrated in FIG. 11C. The LPF may be configured to have a cutoff frequency of f_{C2} greater than f_{LO} to filter the LO signal LO.

Thereafter, the first IF signal IF_1 and the LO signal LO may be combined by the HPF and the LPF to be transmitted and separated, and are AC-coupled. The LO signal LO may be branched into the first AC-coupled LO signal CLO_1 and the second AC-coupled LO signal CLO_2 by the AC-coupling.

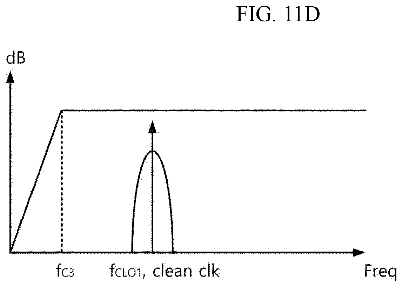

Referring to FIG. 11D, the first AC-coupled LO signal CLO_1 may be filtered by the first capacitor C1 included in the first AC-coupled driver 137 and may have a clean clock (e.g., a cleaner clock signal). The first AC-coupled driver 137 may be configured to have f_{C3} as a cutoff frequency.

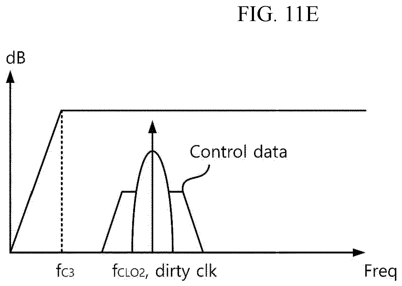

Referring to FIG. 11E, the second AC-coupled LO signal CLO_2 may be filtered by the second capacitor C2 included in the second AC-coupled driver 138 and may have a dirty clock (e.g., a dirtier clock signal). The second AC-coupled driver 138 may be configured to have f_{C3} as a cutoff frequency. As described above, the first AC-coupled LO signal CLO_1 and the second AC-coupled LO signal CLO_2 may have the same frequency, or similar frequencies, (e.g., a band of 480MHz to 640MHz) as the LO signal LO, but there is a difference (e.g., may be the only difference between the signals) in the noise of the clock signal. The second AC-coupled LO signal CLO_2 may be subsequently combined with the control signal CD as illustrated in FIG. 11E.

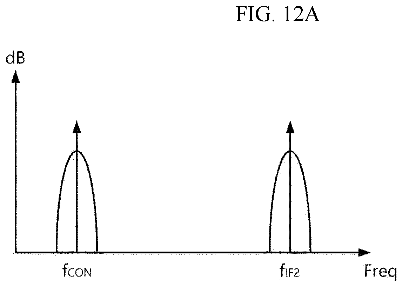

FIGS. 12A to 12C are diagrams for describing an operation of a DC-coupled interface, according to embodiments of the present disclosure. It may be understood that the operation of the DC-coupled interface 140 may be performed by the electronic device 100 according to embodiments of the present disclosure described above. Although the frequency of each signal is described for convenience in FIGS. 12A to 12C, it is of course only as an example.

Referring to FIG. 12A, the second IF signal IF_2 and the control signal CD may be input to an input terminal of the DC-coupled interface 140, that is, the first DC-coupled sub-interface 141. The second IF signal IF_2 may be an up-converted signal from the second baseband signal BB_2 and has a frequency f_{IF2}, and the control signal CD has a frequency F_{CON}. The frequency f_{IF2} may be a higher frequency than the frequency f_{CON}. For example, the frequency f_{IF2} may be a band of 8Ghz to 12GHz, and the frequency f_{CON} may be a band of 120MHz to 160MHz.

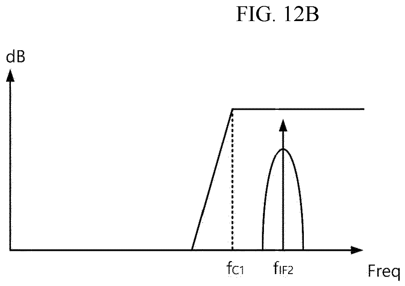

The input second IF signal IF_2 may be filtered by an HPF as illustrated in FIG. 12B. The HPF may be configured to have f_{C1} less than f_{IF2} as a cutoff frequency to filter the second IF signal IF _2. To filter the first IF signal IF_1 and the second IF signal IF_2, the HPFs included in each sub-interface may be configured to have the same cutoff frequency (or similar cutoff frequencies).

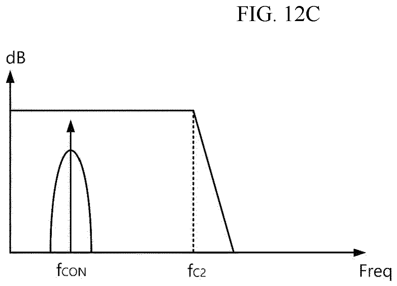

The input control signal CD may be filtered by an LPF as illustrated in FIG. 12C. The LPF may be configured to have a cutoff frequency of f_{C2} greater than f_{CON} to filter the control signal CD. To filter the LO signal LO and the control signal CD, the LPFs included in each sub-interface may be configured to have the same cutoff frequency (or similar cutoff frequencies).

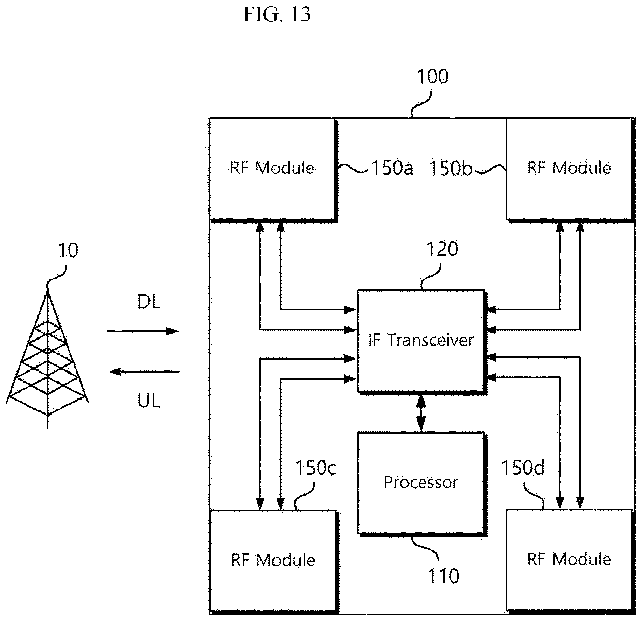

FIG. 13 is a diagram illustrating a wireless communication system including an electronic device according to embodiments of the present disclosure.

Referring to FIG. 13, the wireless communication system, for example, may be a wireless communication system using a cellular network, such as a 5G (5th generation wireless) system, an LTE (Long Term Evolution) system, an LTE-Advanced system, a CDMA (Code Division Multiple Access) system, and/or a GSM (Global System for Mobile Communications) system, may be a WLAN (wireless local area network) system, or may be any other wireless communication system, but is not limited thereto.

A base station 10 may generally refer to a fixed station that communicates with user equipment and/or other base stations 10, and may exchange data and control information by communicating with user equipment and/or other base stations 10. For example, the base station 10 may also be referred to as a Node B, an eNB (evolved-Node B), a sector, a site, a BTS (base transceiver system), an AP (access point), a relay node, an RRH (remote radio head), a RU (radio unit), a small cell, etc. In the present disclosure, the base station 10 or a cell may be interpreted as a comprehensive meaning indicating some areas or functions covered by a BSC (Base Station Controller) in the CDMA, the Node-B of a WCDMA, the eNB or a sector (a site) in the LTE, etc., and may cover various coverage areas such as megacells, macrocells, microcells, picocells, femtocells and/or relay nodes, RRHs, RUs, small cell communication ranges, etc.

The electronic device 100 may be referred to as a user equipment (UE), and may be fixed or movable. The electronic device 100 may refer to any device capable of transmitting and receiving data and/or control information by communicating with the base station 10 (e.g., via an uplink (UL) and/or downlink (DL)). For example, the electronic device 100 may be referred to as a terminal equipment, an MS (mobile station), an MT (mobile terminal), a UT (user terminal), an SS (subscriber station), a wireless device, a handheld device, etc.

In embodiments, the electronic device 100 may include the above-described processor 110, the IF transceiver 120, and/or RF modules 150a, 150b, 150c, and 150d, but a plurality of RF modules 150a, 150b, 150c, and 150d may be provided. The plurality of RF modules 150a, 150b, 150c, and 150d may be variously disposed in the electronic device 100, and the arrangement method will not be limited to the drawings. For example, when four RF modules 150a, 150b, 150c, and 150d are provided, they may be provided at each edge of the electronic device 100 as illustrated. The plurality of RF modules 150a, 150b, 150c, and 150d may each be configured to transmit/receive a signal polarized in a predetermined (or alternatively, given direction, or each may be configured to transmit/receive signals polarized in two or more different directions.

The IF transceiver 120 is connected with each of the plurality of RF modules 150a, 150b, 150c, and 150d through the AC-coupled interface 130 and the DC-coupled interface 140 as described above, thus a dual path may be formed. Accordingly, the IF transceiver 120 may transmit and receive different combined signals (a signal in which the first IF signal IF_1 and the LO signal LO are combined and a signal in which the second IF signal IF_2 and the control signal CD are combined) through each of the RF modules 150a, 150b, 150c, and 150d and different paths.

According to embodiments of the present disclosure, an IF transceiver, an RF module, and an electronic device including the same may efficiently transmit and receive various signals each having different frequencies by utilizing the AC-coupled interface and the DC-coupled interface, which are heterogeneous interfaces.

Conventional devices and methods for configuring control signals for beamforming (e.g., in FR2 mobile mmWave systems) experience excessive distortion to the control signals (e.g., by virtue of the DC nature of the control signals and/or the high signal frequencies in use by the IF transceiver and RF module). This distortion results in improper configuration of beamforming applied to RF signals to be transmitted and/or received, and thus, decreases communication performance.

However, according to embodiments, improved devices and methods are provided in which local oscillator signals and control signals are transferred between an IF transceiver and an RF module via heterogeneous interfaces. For example, the local oscillator signals may be transferred via an AC-coupled interface and the control signals may be transferred via a DC-coupled interface. Accordingly, the improved devices and methods experience less distortion to the control signals. Therefore, the improved devices and methods overcome the deficiencies of the conventional devices and methods to at least provide improved configuration of beamforming applied to RF signals to be transmitted and/or received, and thus, improve communication performance.

According to embodiments, operations described herein as being performed by the electronic device 100, the processor 110, the IF transceiver 120, the AC-coupled interface 130, the DC-coupled interface 140, the RF module 150, the first signal processing unit 121, the first AC-coupled sub-interface 131, the first DC-coupled sub-interface 141, the second AC-coupled sub-interface 134, the second DC-coupled sub-interface 144, the second signal processing unit 151, the LO driver 132, the 1-1 diplexer 133, the first DC-coupled driver 142, the 1-2 diplexer 143, first PLL 122, the 1-1 mixer MIX 1-1, the 1-2 mixer MIX 1-2, the 1-1 divider 123, the 1-2 divider 124, the first control unit 125, the 2-1 diplexer 135, the AC-coupled dual driver 136, the first AC-coupled driver 137, the second AC-coupled driver 138, the 2-2 diplexer 145, the second DC-coupled driver 146, the second PLL 152, the 2-1 mixer MIX 2-1, the 2-2 mixer MIX 2-2, the second divider 153, the second control unit 154, the base station 10, and/or RF modules 150a, 150b, 150c, and/or 150d may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

It will be understood that when an element is referred to as being "connected" or "coupled" to another element, it may be directly connected or coupled to the other element or intervening elements may be present. As used herein the term "and/or" includes any and all combinations of one or more of the associated listed items.

The above are specific examples for carrying out the present disclosure. Embodiments in which a design is changed simply, or which are easily changed, may be included in the present disclosure as well as embodiments described above. In addition, technologies that are easily changed and implemented by using embodiments provided herein may be included in the present disclosure. While the present disclosure has been described with reference to embodiments thereof, it will be apparent to those of ordinary skill in the art that various changes and modifications may be made thereto without departing from the scope of the present disclosure as set forth in the following claims.

## Claims

1. An electronic device (100) comprising:
an IF transceiver (120) configured to:
output a first IF signal (IF_1) and an LO signal (LO) via an AC-coupled interface (130), the AC-coupled interface (130) configured to perform AC-coupling,
the first IF signal being up-converted from a first baseband signal (BB_1), and the LO signal being generated by at least one processor (110), and
output a second IF signal (IF_2) and a first control signal (CD) via a DC-coupled interface (140), the DC-coupled interface (140) configured to perform DC-coupling, the second IF signal being up-converted from a second baseband signal (BB_2) generated by the at least one processor, and the first control signal being generated based on the LO signal; and
an RF module (150) configured to:
separate the first IF signal and the LO signal obtained via the AC-coupled interface,
separate the second IF signal and the first control signal obtained via the DC-coupled interface,
generate a first RF signal (RF1) based on the first IF signal for transmission via an antenna array, and
generate a second RF signal (RF2) based on the second IF signal for transmission via the antenna array.

2. The electronic device of claim 1, wherein the IF transceiver (120) comprises:
a first signal processing unit (121) configured to process the first baseband signal (BB_1) and the second baseband signal (BB_2) to generate the first IF signal (IF_1), the second IF signal (IF_2), the LO signal (LO), and the first control signal (CD);
a first AC-coupled sub-interface (131) configured to diplex the first IF signal and the LO signal for output to a first channel (CH1) corresponding to the AC-coupled interface (130); and
a first DC-coupled sub-interface (141) configured to diplex the second IF signal and the first control signal for output to a second channel (CH2) corresponding to the DC-coupled interface (140).

3. The electronic device of claim 2, wherein the RF module (150) comprises:
a second AC-coupled sub-interface (134) configured to:
receive the first IF signal (IF_1) and the LO signal (LO) from the first channel (CH1),
separate the first IF signal and the LO signal using diplexing, and
separate a first AC-coupled LO signal (CLO_1) and a second AC-coupled LO signal (CLO_2) from the LO signal based on an AC-coupling;
a second DC-coupled sub-interface (144) configured to:
receive the second IF signal (IF_2) and the first control signal (CD) from the second channel (CH2), and
separate the second IF signal and the first control signal using diplexing; and
a second signal processing unit (151) configured to process the first IF signal, the second IF signal, the first AC-coupled LO signal, the second AC-coupled LO signal, and the first control signal to generate the first RF signal (RF_1) and the second RF signal (RF_2).

4. The electronic device of claim 2 or 3, wherein the first signal processing unit (121) comprises:
a first PLL (122) configured to generate a first PLL signal (SPLL);
a first mixer (MIX 1-1) configured to up-convert the first baseband signal (BB_1) based on the first PLL signal to generate the first IF signal (IF_1);
a second mixer (MIX 1-2) configured to up-convert the second baseband signal (BB_2) based on the first PLL signal to generate the second IF signal (IF_2);
a first divider (123) configured to divide the first PLL signal to generate the LO signal (LO);
a second divider (124) configured to divide the LO signal to generate a first control clock, CC, signal (CC); and
first processing circuitry (125) configured to generate the first control (CD) signal based on the first CC signal.

5. The electronic device of claim 4, wherein the first AC-coupled sub-interface (131) comprises:
an LO driver (132) configured to amplify the LO signal (LO) obtained from the first divider (123); and
a first diplexer (133) configured to combine the first IF signal (IF_1) and the LO signal (LO) including being configured to:
pass the first IF signal through a first HPF, and
pass the LO signal through a first LPF.

6. The electronic device of claim 4, wherein the first DC-coupled sub-interface (141) comprises:
a first DC-coupled driver (142) configured to DC-couple the first control signal (CD) obtained from the first processing circuitry (125); and
a second diplexer (143) configured to combine the second IF signal (IF_2) and the first control signal including being configured to:
pass the second IF signal through a second HPF, and
pass the first control signal obtained from the first DC-coupled driver through a second LPF.

7. The electronic device of claim 3, wherein the second AC-coupled sub-interface (134) comprises:
a third diplexer (135) configured to separate the first IF signal (IF_1) and the LO signal (LO) including being configured to:
pass the first IF signal through a third HPF, and
pass the LO signal through a third LPF;
a first AC-coupled driver (137) configured to AC-couple the LO signal to generate the first AC-coupled LO signal (CLO_1); and
a second AC-coupled driver (138) configured to AC-couple the LO signal to generate the second AC-coupled LO signal (CLO_2).

8. The electronic device of claim 3 or 7, wherein the second DC-coupled sub-interface (144) comprises:
a fourth diplexer (145) configured to separate the second IF signal (IF_2) and the first control signal (CD) including being configured to:
pass the second IF signal through a fourth HPF, and
pass the first control signal through a fourth LPF; and
a second DC-coupled driver (146) configured to DC-couple the first control signal received from the fourth diplexer.

9. The electronic device of claim 3 or 7 or 8, wherein the second signal processing unit (151) comprises:
a second PLL (152) configured to generate a second PLL signal (SPLL) based on the first AC-coupled LO signal (CLO_1);
a third mixer (MIX 2-1) configured to up-convert the first IF signal (IF_1) based on the second PLL signal to generate the first RF signal (RF_1);
a fourth mixer (MIX 2-2) configured to up-convert the second IF signal (IF_2) based on the second PLL signal to generate the second RF signal (RF_2);
a third divider (153) configured to divide the second AC-coupled LO signal (CLO_2) to generate a second CC signal (CC); and
second processing circuitry (154) configured to generate a second control signal (CD) based on the second CC signal.

10. The electronic device of claim 8, when dependent on claim 7, wherein
the third LPF and the fourth LPF are configured to have the same cutoff frequency; and
the third HPF and the fourth HPF are configured to have the same cutoff frequency.

11. The electronic device of any of claims 2 to 10, wherein both the first channel (CH1) and the second channel (CH2) are based on FPCBs.

12. The electronic device of claim 3 or any of claims 7 to 10, wherein
the LO signal (LO), the first AC-coupled LO signal (CLO_1), and the second AC-coupled LO signal (CLO_2) have the same frequency band; and
the IF transceiver (120) and the RF module (150) are synchronized with each other based on the LO signal (LO), the first AC-coupled LO signal (CLO_1), and the second AC-coupled LO signal (CLO_2).

13. An RF module (150) for use in the electronic device of any preceding claim, comprising:
a first diplexer (135) included in an AC-coupled interface (130) configured to perform AC-coupling, the first diplexer (135) configured to
receive a first IF signal (IF_1) and an LO signal (LO) from an IF transceiver (120) through a first channel (CH1), and
separate the first IF signal and the LO signal using diplexing;
a second diplexer (145) included in a DC-coupled interface (140) configured to perform DC-coupling, the second diplexer (145) configured to
receive a second IF signal (IF_2) and a first control signal (CD) from the IF transceiver through a second channel (CH2), and
separate the second IF signal and the first control signal using diplexing;
an AC-coupled dual driver (136) configured to AC-couple the LO signal to generate a first AC-coupled LO signal (CLO_2) and a second AC-coupled LO signal (CLO_1);
a DC-coupled driver (146) configured to DC-couple the first control signal obtained from the second diplexer; and
a signal processing unit (151) configured to
generate a PLL signal (SPLL) using the first AC-coupled LO signal as a signal for phase detection,
generate a first RF signal (RF_1) by up-converting the first IF signal based on the PLL signal,
generate a second RF signal (RF_2) by up-converting the second IF signal based on the PLL signal, and
generate a second control signal (CD) based on the second AC-coupled LO signal.

14. The RF module of claim 13, wherein the signal processing unit (151) is configured to:
generate a Control Clock, CC, signal (CC) by dividing the second AC-coupled LO signal (CLO_2); and
generate the second control signal (DC) based on the CC signal.

15. The RF module of claim 13 or 14, wherein the DC-coupled driver (146) is configured to
transmit a write signal (CD_W) included in the second control signal (CD); or
receive a read signal (CD_R) included in the first control signal.

## Patentansprüche

1. Elektronische Vorrichtung (100), umfassend:
einen IF-Transceiver (120), der konfiguriert ist zum:
Ausgeben eines ersten IF-Signals (IF_1) und eines LO-Signal (LO) über eine AC-gekoppelte Schnittstelle (130), wobei die AC-gekoppelte Schnittstelle (130) zum Durchführen der AC-Kopplung konfiguriert ist, das erste IF-Signal aus einem ersten Basisbandsignal (BB_1) aufwärtsgewandelt wird und das LO-Signal von mindestens einem Prozessor (110) erzeugt wird, und
Ausgeben eines zweiten IF-Signals (IF_2) und eines ersten Steuersignals (CD) über eine DC-gekoppelte Schnittstelle (140), wobei die DC-gekoppelte Schnittstelle (140) zur Entkopplung konfiguriert ist und das zweite IF-Signal aus einem zweiten Basisbandsignal (BB_2), das von dem mindestens einen Prozessor erzeugt wird, aufwärtsgewandelt wird und das erste Steuersignal basierend auf dem LO-Signal erzeugt wird; und
ein RF-Modul (150), das konfiguriert ist zum:
Trennen des ersten IF-Signals und des über die AC-gekoppelte Schnittstelle erhaltenen LO-Signals,
Trennen des zweiten IF-Signals und des über die DC-gekoppelte Schnittstelle erhaltenen ersten Steuersignals,
Erzeugen eines ersten RF-Signals (RF1) basierend auf dem ersten IF-Signal zur Übertragung über eine Antennenanordnung; und
Erzeugen eines zweiten RF-Signals (RF2) basierend auf dem zweiten IF-Signal zur Übertragung über die Antennenanordnung.

2. Elektronische Vorrichtung nach Anspruch 1, wobei der IF-Transceiver (120) Folgendes umfasst:
eine erste Signalverarbeitungseinheit (121), die zum Verarbeiten des ersten Basisbandsignals (BB_1) und des zweiten Basisbandsignals (BB_2) konfiguriert ist, um das erste IF-Signal (IF_1), das zweite IF-Signal (IF_2), das LO-Signal (LO) und das erste Steuersignal (CD) zu erzeugen;
eine erste AC-gekoppelte Unterschnittstelle (131), die so konfiguriert ist, dass sie das erste IF-Signal und das LO-Signal für die Ausgabe an einen ersten Kanal (CH1) diplext, der der AC-gekoppelten Schnittstelle (130) entspricht; und
eine erste DC-gekoppelte Unterschnittstelle (141), die so konfiguriert ist, dass sie das zweite IF-Signal und das erste Steuersignal für die Ausgabe an einen zweiten Kanal (CH2) diplext, der der DC-gekoppelten Schnittstelle (140) entspricht.

3. Elektronische Vorrichtung nach Anspruch 2, wobei das RF-Modul (150) Folgendes umfasst:
eine zweite AC-gekoppelte Unterschnittstelle (134), die konfiguriert ist zum:
Empfangen des ersten IF-Signals (IF_1) und des LO-Signals (LO) vom ersten Kanal (CH1),
Trennen des ersten IF-Signals und des LO-Signals unter Verwendung von Diplexing und
Trennen eines ersten AC-gekoppelten LO-Signals (CLO_1) und eines zweiten AC-gekoppelten LO-Signals (CLO_2) vom LO-Signal basierend auf einer AC-Kopplung;
eine zweite DC-gekoppelte Unterschnittstelle (144), die konfiguriert ist zum:
Empfangen des zweiten IF-Signals (IF_2) und des ersten Steuersignals (CD) vom zweiten Kanal (CH2) und
Trennen des zweiten IF-Signals und des ersten Steuersignals unter Verwendung von Diplexing; und
eine zweite Signalverarbeitungseinheit (151), die so konfiguriert ist, dass sie das erste IF-Signal, das zweite IF-Signal, das erste AC-gekoppelte LO-Signal, das zweite AC-gekoppelte LO-Signal und das erste Steuersignal verarbeitet, um das erste RF-Signal (RF_1) und das zweite RF-Signal (RF_2) zu erzeugen.

4. Elektronische Vorrichtung nach Anspruch 2 oder 3, wobei die erste Signalverarbeitungseinheit (121) Folgendes umfasst:
eine erste PLL (122), die so konfiguriert ist, dass sie ein erstes PLL-Signal (SPLL) erzeugt;
einen ersten Mischer (MIX 1-1), der so konfiguriert ist, dass er das erste Basisbandsignal (BB_1) basierend auf dem ersten PLL-Signal aufwärtswandelt, um das erste IF-Signal (IF_1) zu erzeugen;
einen zweiten Mischer (MIX 1-2), der so konfiguriert ist, dass er das zweite Basisbandsignal (BB_2) basierend auf dem ersten PLL-Signal aufwärtswandelt, um das zweite IF-Signal (IF_2) zu erzeugen;
einen ersten Teiler (123), der so konfiguriert ist, dass er das erste PLL-Signal teilt, um das LO-Signal (LO) zu erzeugen;
einen zweiten Teiler (124), der so konfiguriert ist, dass er das LO-Signal teilt, um ein erstes Steuertakt-, CC-, Signal (CC) zu erzeugen; und
erste Verarbeitungsschaltungen (125), die so konfiguriert sind, dass sie das erste Steuersignal (CD) basierend auf dem ersten CC-Signal erzeugen.

5. Elektronische Vorrichtung nach Anspruch 4, wobei die erste AC-gekoppelte Unterschnittstelle (131) Folgendes umfasst:
einen LO-Treiber (132), der so konfiguriert ist, dass er das vom ersten Teiler (123) erhaltene LO-Signal (LO) verstärkt; und
einen ersten Diplexer (133), der so konfiguriert ist, dass er das erste IF-Signal (IF_1) und das LO-Signal (LO) kombiniert, was einschließt, dass er konfiguriert ist zum:
Hindurchführen des ersten IF-Signals durch einen ersten HPF und
Hindurchführen des LO-Signals durch einen ersten LPF.

6. Elektronische Vorrichtung nach Anspruch 4, wobei die erste DC-gekoppelte Unterschnittstelle (141) Folgendes umfasst:
einen ersten DC-gekoppelten Treiber (142), der so konfiguriert ist, dass er das erste von den ersten Verarbeitungsschaltungen (125) erhaltene Steuersignal (CD) DC-koppelt; und
einen zweiten Diplexer (143), der so konfiguriert ist, dass er das zweite IF-Signal (IF_2) und das erste Steuersignal kombiniert, was einschließt, dass er konfiguriert ist zum:
Hindurchführen des zweiten IF-Signals durch einen zweiten HPF und
Hindurchführen des ersten vom ersten DC-gekoppelten Treiber erhaltenen Steuersignals durch einen zweiten LPF.

7. Elektronische Vorrichtung nach Anspruch 3, wobei die zweite AC-gekoppelte Unterschnittstelle (134) Folgendes umfasst:
einen dritten Diplexer (135), der so konfiguriert ist, dass er das erste IF-Signal (IF_1) und das LO-Signal (LO) trennt, was einschließt, dass er konfiguriert ist zum:
Hindurchführen des ersten IF-Signals durch einen dritten HPF und
Hindurchführen des LO-Signals durch einen dritten LPF;
einen ersten AC-gekoppelten Treiber (137), der so konfiguriert ist, dass er das LO-Signal AC-koppelt, um das erste AC-gekoppelte LO-Signal (CLO_1) zu erzeugen; und
einen zweiten AC-gekoppelten Treiber (138), der so konfiguriert ist, dass er das LO-Signal AC-koppelt, um das zweite AC-gekoppelte LO-Signal (CLO_2) zu erzeugen.

8. Elektronische Vorrichtung nach Anspruch 3 oder 7, wobei die zweite DC-gekoppelte Unterschnittstelle (144) Folgendes umfasst:
einen vierten Diplexer (145), der so konfiguriert ist, dass er das zweite IF-Signal (IF_2) und das erste Steuersignal (CD) trennt, was einschließt, dass er konfiguriert ist zum:
Hindurchführen des zweiten IF-Signals durch einen vierten HPF und
Hindurchführen des ersten Steuersignals durch einen vierten LPF; und
einen zweiten DC-gekoppelten Treiber (146), der so konfiguriert ist, dass er das erste vom vierten Diplexer empfangene Steuersignal DC-koppelt.

9. Elektronische Vorrichtung nach Anspruch 3 oder 7 oder 8, wobei die zweite Signalverarbeitungseinheit (151) Folgendes umfasst:
eine zweite PLL (152), die so konfiguriert ist, dass sie ein zweites PLL-Signal (SPLL) basierend auf dem ersten AC-gekoppelten LO-Signal erzeugt (CLO_1);
einen dritten Mischer (MIX 2-1), der so konfiguriert ist, dass er das erste IF-Signal (IF_1) basierend auf dem zweiten PLL-Signal aufwärtswandelt, um das erste RF-Signal (RF_1) zu erzeugen;
einen vierten Mischer (MIX 2-2), der so konfiguriert ist, dass er das zweite IF-Signal (IF_2) basierend auf dem zweiten PLL-Signal aufwärtswandelt, um das zweite RF-Signal (RF_2) zu erzeugen;
einen dritten Teiler (153), der so konfiguriert ist, dass er das zweite AC-gekoppelte LO-Signal (CLO_2) teilt, um ein zweites CC-Signal (CC) zu erzeugen; und
zweite Verarbeitungsschaltungen (154), die so konfiguriert sind, dass sie basierend auf dem zweiten CC-Signal ein zweites Steuersignal (CD) erzeugen.

10. Elektronische Vorrichtung nach Anspruch 8, wenn abhängig von Anspruch 7, wobei
der dritte LPF und der vierte LPF so konfiguriert sind, dass sie die gleiche Grenzfrequenz aufweisen; und
der dritte HPF und der vierte HPF so konfiguriert sind, dass sie die gleiche Grenzfrequenz aufweisen.

11. Elektronische Vorrichtung nach einem der Ansprüche 2 bis 10, wobei sowohl der erste Kanal (CH1) als auch der zweite Kanal (CH2) auf FPCBs basieren.

12. Elektronische Vorrichtung nach Anspruch 3 oder einem der Ansprüche 7 bis 10, wobei
das LO-Signal (LO), das erste AC-gekoppelte LO-Signal (CLO_1), und das zweite AC-gekoppelte LO-Signal (CLO_2) das gleiche Frequenzband aufweisen; und
der IF-Transceiver (120) und das RF-Modul (150) basierend auf dem LO-Signal (LO), dem ersten AC-gekoppelten LO-Signal (CLO_1) und dem zweiten AC-gekoppelten LO-Signal (CLO_2) miteinander synchronisiert werden.

13. RF-Modul (150) zur Verwendung in der elektronischen Vorrichtung nach einem vorstehenden Anspruch, umfassend:
einen ersten Diplexer (135), der in einer AC-gekoppelten Schnittstelle (130) eingeschlossen ist, wobei er zum Durchführen der AC-Kopplung konfiguriert ist, wobei der erste Diplexer (135) ist so konfiguriert, dass er
ein erstes IF-Signal (IF_1) und ein LO-Signal (LO) von einem IF-Transceiver (120) über einen ersten Kanal (CH1) empfängt und
das erste IF-Signal und das LO-Signal unter Verwendung von Diplexing trennt;
einen zweiten Diplexer (145), der in einer DC-gekoppelten Schnittstelle (140) eingeschlossen ist, wobei er zum Durchführen der DC-Kopplung konfiguriert ist, wobei der zweite Diplexer (145) so konfiguriert ist, dass er
ein zweites IF-Signal (IF_2) und ein erstes Steuersignal (CD) vom IF-Transceiver über einen zweiten Kanal (CH2) empfängt und
das zweite IF-Signal und das erste Steuersignal unter Verwendung von Diplexing trennt;
einen AC-gekoppelter Doppeltreiber (136), der so konfiguriert ist, dass er das LO-Signal AC-koppelt, um ein erstes AC-gekoppeltes LO-Signal (CLO_2) und ein zweites AC-gekoppeltes LO-Signal (CLO_1) zu erzeugen;
einen DC-gekoppelter Treiber (146), der so konfiguriert ist, dass er das erste vom zweiten Diplexer erhaltene Steuersignal DC-koppelt; und
eine Signalverarbeitungseinheit (151), die so konfiguriert ist, dass sie
ein PLL-Signal (SPLL) unter Verwendung des ersten AC-gekoppelten LO-Signals als Signal zur Phasenerkennung erzeugt,
ein erstes RF-Signal (RF_1) durch Aufwärtswandeln des ersten IF-Signals basierend auf dem PLL-Signal erzeugt,
ein zweites RF-Signal (RF_2) durch Aufwärtswandeln des zweiten IF-Signals basierend auf dem PLL-Signal erzeugt und
ein zweites Steuersignal (CD) basierend auf dem zweiten AC-gekoppelten LO-Signal erzeugt.

14. RF-Modul nach Anspruch 13, wobei die Signalverarbeitungseinheit (151) konfiguriert ist zum:
Erzeugen eines Steuertakt-, CC-, Signals (CC) durch Teilen des zweiten AC-gekoppelten LO-Signals (CLO_2); und
Erzeugen des zweitens Steuersignals (DC) basierend auf dem CC-Signal.

15. RF-Modul nach Anspruch 13 oder 14, wobei der DC-gekoppelte Treiber (146) konfiguriert ist zum
Übertragen eines Schreibsignals (CD_W), das im zweiten Steuersignal (CD) eingeschlossen ist; oder
Empfangen eines Lesesignals (CD_R), das im ersten Steuersignal eingeschlossen ist.

## Revendications

1. Dispositif électronique (100) comprenant :
un émetteur-récepteur FI (120) configuré pour :
émettre un premier signal FI (FI_1) et un signal LO (LO) via une interface couplée en CA (130), ladite interface couplée en AC (130) étant configurée pour effectuer un couplage CA, le premier signal FI étant converti à la hausse à partir d'un premier signal en bande de base (BB_1), et le signal LO étant généré par au moins un processeur (110), et
émettre un deuxième signal FI (FI_2) et un premier signal de commande (CD) via une interface couplée en CC (140), ladite interface couplée en CC (140) étant configurée pour effectuer le découplage, le deuxième signal FI étant converti à la hausse à partir d'un deuxième signal en bande de base (BB_2) généré par au moins un processeur, et le premier signal de commande étant généré sur la base du signal LO ; et
un module RF (150) configuré pour :
séparer le premier signal FI et le signal LO obtenu via l'interface couplée en CA,
séparer le deuxième signal FI et le premier signal de commande obtenu via l'interface couplée en CC,
générer un premier signal RF (RF1) basé sur le premier signal FI pour transmission via un réseau d'antennes, et
générer un deuxième signal RF (RF2) basé sur le deuxième signal FI pour la transmission via le réseau d'antennes.

2. Dispositif électronique selon la revendication 1, dans lequel l'émetteur-récepteur FI (120) comprend :
une première unité de traitement du signal (121) configurée pour traiter le premier signal en bande de base (BB_1) et le deuxième signal en bande de base (BB_2) pour générer le premier signal FI (FI_1), le deuxième signal FI (FI_2), le signal LO (LO) et le premier signal de commande (CD) ;
une première sous-interface couplée en CA (131) configurée pour diplexer le premier signal FI et le signal LO pour la sortie vers un premier canal (CH1) correspondant à l'interface couplée en CA (130) ; et
une première sous-interface couplée en CC (141) configurée pour diplexer le deuxième signal FI et le premier signal de commande pour la sortie vers un deuxième canal (CH2) correspondant à l'interface couplée en CC (140).

3. Dispositif électronique selon la revendication 2, dans lequel le module RF (150) comprend :
une deuxième sous-interface couplée en CA (134) configurée pour :
recevoir le premier signal FI (FI_1) et le signal LO (LO) du premier canal (CH1),
séparer le premier signal FI et le signal LO en utilisant le diplexage, et
séparer un premier signal LO couplé en CA (CLO_1) et un deuxième signal LO couplé en CA (CLO_2) à partir du signal LO basé sur un couplage CA ;
une deuxième sous-interface couplée en CC (144) configurée pour :
recevoir le deuxième signal FI (FI_2) et le premier signal de commande (CD) du deuxième canal (CH2), et
séparer le deuxième signal FI et le premier signal de commande en utilisant le diplexage ; et
une deuxième unité de traitement du signal (151) configurée pour traiter le premier signal FI, le deuxième signal FI, le premier signal LO couplé en CA, le deuxième signal LO couplé en CA et le premier signal de commande afin de générer le premier signal RF (RF_1) et le deuxième signal RF (RF_2).

4. Dispositif électronique selon la revendication 2 ou 3, dans lequel la première unité de traitement du signal (121) comprend :
une première PLL (122) configurée pour générer un premier signal PLL (SPLL) ;
un premier mélangeur (MIX 1-1) configuré pour convertir à la hausse le premier signal en bande de base. (BB_1) basé sur le premier signal PLL pour générer le premier signal FI (FI_1) ;
un deuxième mélangeur (MIX 1-2) configuré pour convertir à la hausse le deuxième signal en bande de base (BB_2) basé sur le premier signal PLL pour générer le deuxième signal FI (FI_2) ;
un premier diviseur (123) configuré pour diviser le premier signal PLL afin de générer le signal LO (LO) ;
un deuxième diviseur (124) configuré pour diviser le signal LO afin de générer un premier signal d'horloge de commande, CH ; et
un premier circuit de traitement (125) configuré pour générer le premier signal de commande (CD) basé sur le premier signal CH.

5. Dispositif électronique selon la revendication 4, dans lequel la première sous-interface couplée en CA (131) comprend :
un pilote LO (132) configuré pour amplifier le signal LO (LO) obtenu à partir du premier diviseur (123) ; et
un premier diplexeur (133) configuré pour combiner le premier signal FI (FI_1) et le signal LO (LO), notamment en étant configuré pour :
faire passer le premier signal FI à travers un premier filtre passe-haut, et
faire passer le signal LO à travers un premier filtre passe-bas.

6. Dispositif électronique selon la revendication 4, dans lequel la première sous-interface couplée en CC (141) comprend :
un premier pilote couplé en CC (142) configuré pour coupler en CC le premier signal de commande (CD) obtenu à partir du premier circuit de traitement (125) ; et
un deuxième diplexeur (143) configuré pour combiner le deuxième signal FI (FI_2) et le premier signal de commande, notamment en étant configuré pour :
faire passer le deuxième signal FI à travers un deuxième filtre passe-haut, et
faire passer le premier signal de commande obtenu du premier pilote couplé en CC à travers un deuxième filtre passe-bas.

7. Dispositif électronique selon la revendication 3, dans lequel la deuxième sous-interface couplée en CA (134) comprend :
un troisième diplexeur (135) configuré pour séparer le premier signal FI (FI_1) et le signal LO (LO), notamment en étant configuré pour :
faire passer le premier signal FI à travers un troisième filtre passe-haut, et
faire passer le signal LO à travers un troisième filtre passe-bas ;
un premier pilote couplé en CA (137) configuré pour coupler en CA le signal LO afin de générer le premier signal LO couplé en CA (CLO_1) ; et
un deuxième pilote couplé en CA (138) configuré pour coupler en CA le signal LO afin de générer le deuxième signal LO couplé en CA (CLO_2).

8. Dispositif électronique selon la revendication 3 ou 7, dans lequel la deuxième sous-interface couplée en CC (144) comprend :
un quatrième diplexeur (145) configuré pour séparer le deuxième signal FI (FI_2) et le premier signal de commande (CD) notamment en étant configuré pour :
faire passer le deuxième signal FI à travers un quatrième filtre passe-haut, et
faire passer le premier signal de commande à travers un quatrième filtre passe-bas ; et
un deuxième pilote couplé en CC (146) configuré pour coupler en CC le premier signal de commande reçu du quatrième diplexeur.

9. Dispositif électronique selon la revendication 3 ou 7 ou 8, dans lequel la deuxième unité de traitement du signal (151) comprend :
une deuxième PLL (152) configurée pour générer un deuxième signal PLL (SPLL) basé sur le premier signal LO couplé en CA (CLO_1) ;
un troisième mélangeur (MIX 2-1) configuré pour convertir à la hausse le premier signal FI (IF_1) sur la base du deuxième signal PLL pour générer le premier signal RF (RF_1)
un quatrième mélangeur (MIX 2-2) configuré pour convertir à la hausse le deuxième signal FI (IF_2) sur la base du deuxième signal PLL pour générer le deuxième signal RF (RF_2) ;
un troisième diviseur (153) configuré pour diviser le deuxième signal LO couplé en CA (CLO_2) pour générer un deuxième signal HC (HC) ; et
un deuxième circuit de traitement (154) configuré pour générer un deuxième signal de commande (CD) sur la base du deuxième signal HC.

10. Dispositif électronique selon la revendication 8, lorsqu'il dépend de la revendication 7, dans lequel
le troisième et le quatrième filtres passe-bas sont configurés pour présenter la même fréquence de coupure ;
le troisième et le quatrième filtres passe-haut sont configurés pour présenter la même fréquence de coupure.

11. Dispositif électronique selon l'une quelconque des revendications 2 à 10, dans lequel le premier canal (CH1) et le deuxième canal (CH2) sont tous deux basés sur des FPCB.

12. Dispositif électronique selon la revendication 3 ou l'une quelconque des revendications 7 à 10, dans lequel
le signal LO (LO), le premier signal LO couplé en CA (CLO_1), et le deuxième signal LO couplé en CA (CLO_2) présentent la même bande de fréquence ; et
l'émetteur-récepteur FI (120) et le module RF (150) sont synchronisés entre eux sur la base du signal LO (LO), le premier signal LO couplé en CA (CLO_1), et le deuxième signal LO couplé en CA (CLO_2).

13. Module RF (150) destiné à être utilisé dans le dispositif électronique selon une quelconque revendication précédente, comprenant :
un premier diplexeur (135) inclus dans une interface à couplage CA (130) étant configuré pour effectuer un couplage en CA, le premier diplexeur (135) étant configuré pour
recevoir un premier signal FI (IF_1) et un signal LO (LO) provenant d'un émetteur-récepteur FI (120) via un premier canal (CH1), et
séparer le premier signal FI et le signal LO en utilisant le diplexage ;
un deuxième diplexeur (145) inclus dans une interface couplée en CC (140) configurée pour effectuer un couplage en CC, le deuxième diplexeur (145) étant configuré pour
recevoir un deuxième signal FI (IF_2) et un premier signal de commande (CD) provenant de l'émetteur-récepteur FI via un deuxième canal (CH2), et
séparer le deuxième signal FI et le premier signal de commande en utilisant le diplexage ;
un double pilote couplé en CA (136) configuré pour coupler en CA le signal LO afin de générer un premier signal LO couplé en CA (CLO_2) et un deuxième signal LO couplé en CA (CLO_1) ;
un pilote couplé en CC (146) configuré pour coupler en CC le premier signal de commande obtenu du deuxième diplexeur ; et
une unité de traitement du signal (151) configurée pour
générer un signal PLL (SPLL) en utilisant le premier signal LO couplé en CA comme signal de détection de phase,
générer un premier signal RF (RF_1) en convertissant à la hausse le premier signal FI basé sur le signal PLL,
générer un deuxième signal RF (RF_2) en convertissant à la hausse le deuxième signal FI basé sur le signal PLL, et
générer un deuxième signal de commande (CD) basé sur le deuxième signal LO couplé en CA.

14. Module RF selon la revendication 13, dans lequel l'unité de traitement du signal (151) est configurée pour :
générer un signal d'horloge de contrôle (HC) en divisant le deuxième signal LO couplé en CA (CLO_2) ; et
générer le deuxième signal de commande (CA) basé sur le signal HC.

15. Module RF selon la revendication 13 ou 14, dans lequel le pilote couplé en CC (146) est configuré pour
transmettre un signal d'écriture (CD_W) inclus dans le deuxième signal de commande (CD) ; ou
recevoir un signal de lecture (CD_R) inclus dans le premier signal de commande.
